# EUROPÄISCHE PATENTSCHRIFT

(11) **EP 2 304 195 B1**
(45) Veröffentlichungstag und Bekanntmachung des Hinweises auf die Patenterteilung: **17.12.2014**
(21) Anmeldenummer: 09769119.0
(22) Anmeldetag: 09.06.2009
(51) Int. Cl.: F01K 17/00, F01K 7/18, F01K 7/38

(54) **DAMPFKRAFTANLAGE**
STEAM POWER ASSEMBLY
CENTRALE À VAPEUR

(30) Priorität: 23.06.2008 EP 08011332
(43) Veröffentlichungstag der Anmeldung: 06.04.2011
(73) Patentinhaber: Siemens Aktiengesellschaft, 80333 München (DE)
(72) Erfinder: PIEPER, Norbert, 47178 Duisburg (DE); PÖTTER, Rudolf, 45355 Essen (DE)
(86) Internationale Anmeldenummer: PCT/EP2009/057096
(87) Internationale Veröffentlichungsnummer: WO 2009/156270

(56) Entgegenhaltungen:
- EP-A1- 2 138 677
- DE-B- 1 049 875
- FR-A1- 2 560 636
- JP-A- 2007 192 152
- MINYCHTHALER G ET AL: "DER BETRIEB DER KRAFT-WAERME-KOPPLUNG IN DEN KRAFTWERKEN VON WIENSTROM" VGB KRAFTWERKSTECHNIK, VGB KRAFTWERKSTECHNIK GMBH. ESSEN, DE, Bd. 78, Nr. 5, 1. Januar 1998 (1998-01-01) , Seiten 102-106, XP000742274 ISSN: 0372-5715

## Beschreibung

Die Erfindung betrifft eine Dampfkraftanlage umfassend eine Mitteldruck-Teilturbine mit einer mehrere Stufen umfassenden ersten Flut und eine mehrere Stufen umfassenden zweiten Flut sowie einer Dampfentnahme-Leitung in der zweiten Flut zum Entnehmen von Dampf für einen externen Verbraucher, wobei die erste Flut eine erste Turbinenaustrittsleitung und die zweite Flut eine zweite Turbinenaustrittsleitung aufweist, eine Überströmleitung, eine Drosselklappe und eine Niederdruck-Teilturbine, wobei die Überströmleitung strömungstechnisch mit der ersten Turbinenaustrittsleitung, mit der zweiten Turbinenaustrittleitung und mit der Niederdruck-Teilturbine verbunden ist.

Eine solche Dampfkraftanlage ist zum Beispiel in Dokument DE 1049875 B offenbart.

Des Weiteren betrifft die Erfindung ein Verfahren zum Versorgen eines externen Dampfverbrauchers mit Dampf, wobei eine Mitteldruck-Teilturbine mit einer ersten Flut und einer zweiten Flut vorgesehen ist und der Dampfverbraucher durch die zweite Flut über eine Dampfentnahme-Leitung mit Dampf versorgt wird, wobei expandierter Dampf aus der ersten Flut über eine erste Turbinenaustrittsleitung und expandierter Dampf aus der zweiten Flut über eine zweite Turbinenaustrittsleitung in eine Überströmleitung in eine Niederdruckteilturbine mündet.

Eine Dampfturbine wird auch als Strömungsmaschine bezeichnet. Unter der Bezeichnung Strömungsmaschine werden in der Regel unter anderem Dampf- und Gasturbinen, Wasserturbinen sowie Kreiselverdichter verstanden. Diese Maschinen dienen vorwiegend dem Zweck, einem Strömungsmedium Energie zu entziehen, um damit eine andere Maschine anzutreiben, wie zum Beispiel einen Generator.

Dampfturbinen werden in der Regel in Hochdruck-, Mitteldruck- und Niederdruck-Teilturbinen eingeteilt. Unter einer Hochdruck-Teilturbine wird in dieser Anmeldung eine Teilturbine verstanden, die eingangsseitig mit überhitztem Dampf beaufschlagt wird, der Temperaturen bis zu 620°C und einen Druck bis zu 300 bar aufweisen kann. Die vor genannten Temperaturund Druckangaben sind lediglich Anhaltsgrößen. Teilturbinen, die für höhere Temperaturen und für höhere Drücke ausgelegt sind, können ebenso als Hochdruck-Teilturbine bezeichnet werden. Eine Mitteldruck-Teilturbine wird üblicherweise mit überhitztem Dampf beaufschlagt, der eine Temperatur von ungefähr 620°C und einen Druck von ungefähr 40 bis 70 bar aufweist. Eine Niederdruck-Teilturbine wird üblicherweise mit Dampf beaufschlagt, der aus der Mitteldruck-Teilturbine ausströmt. Dieser aus der Niederdruck-Teilturbine ausströmende Dampf wird schließlich in einem Kondensator gesammelt und wieder in Wasser umgewandelt.

In der Regel wird der aus der Hochdruck-Teilturbine ausströmende Dampf in einem Zwischenüberhitzer erhitzt und in die Mitteldruck-Teilturbine eingeströmt.

Die Unterteilung in Hochdruck-, Mitteldruck- und Niederdruck-Teilturbinen wird in der Fachwelt nicht einheitlich verwendet. So können die Dampfparameter wie z.B. Temperatur und Druck nicht als einziges Unterscheidungskriterium zwischen einer Hochdruck-, Mitteldruck- und Niederdruck-Teilturbine verwendet werden. Ein wesentliches Merkmal zur Identifizierung einer Mitteldruck-Teilturbine ist, dass diese mit einen Dampf beaufschlagt wird, der aus der Hochdruck-Teilturbine kommt und in einem Zwischenüberhitzer auf eine höhere Temperatur erhitzt wird.

In einer Dampfkraftanlage wird die thermische Energie des Dampfes vorwiegend in mechanische Energie umgewandelt, um beispielweise einen Turbogenerator anzutreiben. Es ist aber auch bekannt, dass Dampfturbinen nicht nur mechanische Energie liefern, sondern auch Dampf für bestimmte Zwecke zur Verfügung stellen. Beispielsweise kann aus der Dampfturbine Dampf entnommen werden, um Prozessdampf für einen chemischen Prozess bereitzustellen oder um Heizdampf für die Fernwärme zur Verfügung zu stellen.

Solch ein Dampf muss in der Regel bei einem definierten Druck zur Verfügung gestellt werden. Es ist bekannt, in einer Dampfanlage eine Dampfturbine derart auszubilden, dass nach einer bestimmten Stufe ein gewisser Anteil an Dampf an einer Entnahmestelle entnommen wird, der für andere Zwecke zur Verfügung gestellt wird. Der restliche Dampf wird weiterhin dazu verwendet, thermische in mechanische Energie umzuwandeln. Es kann allerdings vorkommen, dass beim Betrieb der Dampfturbine bei Teillast oder bei erhöhter Dampfentnahme der Druck des Dampfes an der Entnahmestelle sinkt. Es müssten dann zusätzliche Maßnahmen getroffen werden, um den geforderten Dampfdruck zu erreichen.

Die Entnahme von Dampf aus der Dampfturbine für nachgeschaltete Prozesse kann im Rahmen einer nachträglichen CO2-Abscheidung an Bedeutung gewinnen. Dazu wird ein Dampfbedarf erwartet, der zwischen 40% und 60% des Dampfmassenstroms am Austritt der Mitteldruck-Teilturbine bei einem Druck im Bereich zwischen 3,5 und 5,5 bar liegt.

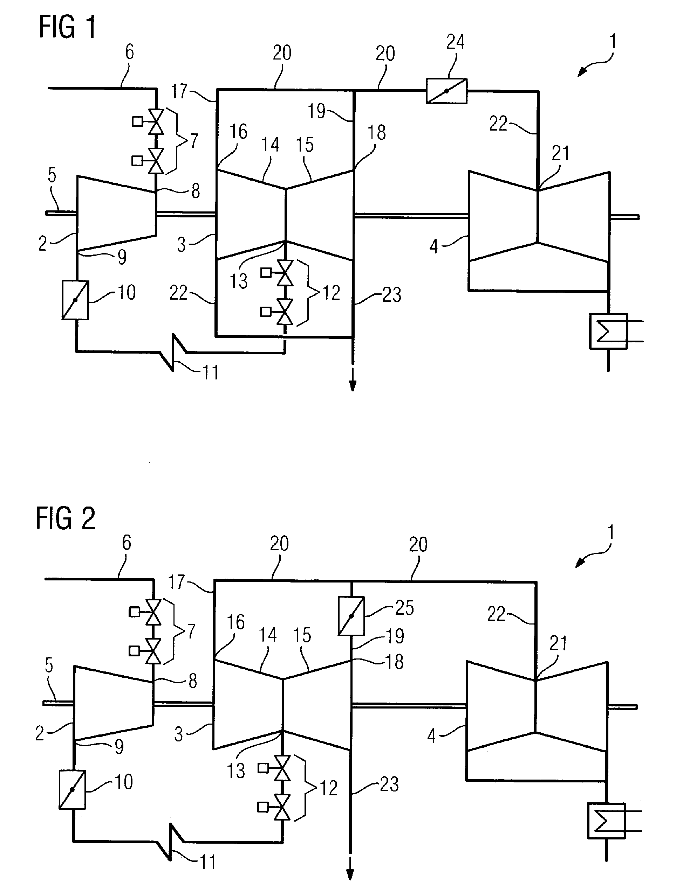

Es sind Dampfkraftanlagen mit zweiflutigen Mitteldruck-Teilturbinen bekannt (siehe Figur 1), wobei die Mitteldruck-Teilturbine eine erste Flut und eine zweite Flut aufweist und die erste und zweite Flut jeweils eine Dampfentnahme-Leitung aufweisen, die derart ausgebildet sind, dass ein externer Dampfverbraucher mit Dampf versorgt wird. Der aus der ersten Flut und aus der zweiten Flut strömende Dampf strömt in den Raum zwischen Innen- und Außengehäuse, der mit der Überströmleitung und dem Anzapfstutzen verbunden ist, wodurch ein symmetrischer Aufbau der Dampfturbine in Bezug auf das Abdampfsystem realisiert ist. Darüber hinaus weist die erste Flut eine erste Turbinenaustrittsleitung und die zweite Flut eine zweite Turbinenaustrittsleitung auf. Die erste Turbinenaustrittsleitung und die zweite Turbinenaustrittsleitung münden in eine Überströmleitung, die die Mitteldruck-Teilturbine strömungstechnisch mit der Niederdruck-Teilturbine verbindet. In dieser Überströmleitung ist eine Drosselklappe angeordnet, die den Druck in der Überströmleitung und somit auch den Druck in der Dampfentnahme-Leitung einstellt. Die Dampfentnahme-Leitung erfolgt häufig zwischen 2 und 6 bar nach der letzten Stufe in der zweiten Flut. Da die Entnahmemenge, die zum Auskochen des CO2 aus dem Lösungsmittel benötigt wird, nahezu proportional zur Leistung des Kraftwerks ist, wird in einem weiten Leistungsbereich die Drosselklappe in der zweiten Turbinenaustrittsleitung fast vollkommen geschlossen. Der über diese Drosselklappe gedrosselte Dampfmassenstrom und die strömungstechnischen Verluste sind somit deutlich reduziert. Der Vorteil liegt darin, dass solche Anlagen ohne CO2-Abtrennung gebaut werden können. Durch eine nachträgliche Erweiterung mit der CO2-Abtrennung entstehen kaum zusätzliche Verluste durch Androsselung.

Nachteilig ist hierbei allerdings, dass bei Entnahme der gesamte in die Niederdruck-Teilturbine strömende Dampf gedrosselt wird. Auf Grund dieser Drosselverluste wird die mechanische Leistung der Dampfturbine deutlich vermindert.

Wünschenswert wäre es, einen geeigneten Dampf zur Verfügung stellen, ohne größeren Druckverlust, der zu einer geringeren mechanischen Leistung führt.

An dieser Stelle setzt die Erfindung an, wobei die Aufgabe darin liegt, eine Dampfkraftanlage mit einer verbesserten Dampfentnahme zur Verfügung zu stellen, wobei strömungsbedingte Verluste vermindert sind.

Darüber hinaus ist es eine Aufgabe der Erfindung ein Verfahren zur Versorgung eines externen Dampfverbrauchers anzugeben, wobei strömungsbedingte Verluste vermindert sind.

Die auf die Dampfkraftanlage hin gerichtete Aufgabe wird gelöst durch eine Dampfkraftanlage gemäß Anspruch 1.

Die auf das Verfahren hin gerichtete Aufgabe wird gelöst durch ein Verfahren gemäß Anspruch 8.

Die Erfindung geht den Weg ein, eine zweiflutige Mitteldruck-Teilturbine mit einer ersten Flut und mit einer zweiten Flut derart auszubilden, dass die erste Flut unmittelbar über die Überströmleitung mit der Niederdruck-Teilturbine strömungstechnisch verbunden ist. Die zweite Flut weist eine Dampfentnahme-Leitung auf, mit der ein externer Dampfverbraucher mit Dampf versorgt wird. Darüber hinaus weist die zweite Flut eine zweite Turbinenaustrittsleitung auf, über die Dampf zur Niederdruck-Teilturbine in die Überströmleitung strömt. Die Erfindung zeichnet sich dadurch aus, dass lediglich in der zweiten Turbinensaustrittsleitung eine Drosselklappe angeordnet wird. Dadurch ist es möglich, den Druck des Dampfes, der aus der Dampfentnahme-Leitung strömt, entsprechend einzustellen. Der Dampfmassenstrom in der ersten Turbinenaustrittsleitung wird somit nicht gedrosselt.

Die erste Flut weist eine erste Turbinenaustrittsleitung und die zweite Flut eine zweite Turbinenaustrittsleitung auf. Die erste Turbinenaustrittsleitung versorgt die Niederdruck-Teilturbine mit Dampf. Die zweite Turbinenaustrittsleitung versorgt die Niederdruck-Teilturbine und die Dampfentnahme-Leitung mit Dampf und somit auch den externen Dampfverbraucher. Der in der Dampfentnahme-Leitung benötigte Druck des Dampfes wird über die in der zweiten Turbinenaustrittsleitung angeordnete Drosselklappe eingestellt. Somit wird nur der in der zweiten Turbinenaustrittsleitung strömende Dampf mit der Drosselklappe gedrosselt, wodurch ein thermodynamischer Verlust entsteht.

Ein Vorteil der Erfindung besteht unter anderem auch darin, dass die Schluckfähigkeit in der zweiten Flut an den externen Dampfverbraucher angepasst werden kann. Die Schluckfähigkeit kann mit einer Massenstromdichte verglichen werden und wird in der Regel als Quotient angegeben, der sich aus dem Volumen (oder der Masse) des strömenden Dampfes pro Zeiteinheit (oder pro Querschnittsfläche) ergibt. Somit werden der über die Drosselklappe strömende Massenstrom und die strömungstechnischen Verluste minimiert.

Der in die erste Flut einströmende Dampf erzeugt wie der in die zweite Flut einströmende Dampf eine auf den Rotor der Mitteldruck-Teilturbine resultierende Kraft. Die resultierende Kraft in der ersten Flut und die resultierende Kraft in der zweiten Flut zeigen in entgegengesetzte Richtungen. Somit ist eine asymmetrisch resultierende Schubkraft möglich, die durch geeignete Wellensteigungen oder einen angepassten Reaktionsgrad der Beschaufelung kompensiert werden kann.

Die Leistungsverluste durch die Entnahme des Dampfes für den externen Dampfverbraucher sind nunmehr deutlich geringer, da der Dampf in der ersten Flut keine gewollte Drosselung erfährt. Ein weiterer Vorteil ist, dass die Drosselklappe in der zweiten Turbinenaustrittsleitung nunmehr kostengünstiger gefertigt werden kann als es bisher gemäß dem Stand der Technik möglich war. Darüber hinaus ist es möglich die Höhe der Überströmleitung zu reduzieren.

Vorteilhafte Weiterbildungen sind in den Unteransprüchen angegeben.

Vorteilhafterweise wird die Dampfentnahme-Leitung nach einer Dampfentnahme-Stufe angeordnet. Die erste Flut und die zweite Flut umfassen mehrere Stufen. Pro Stufe ändert sich die Temperatur und der Druck des durchströmenden Dampfes. Für die externen Verbraucher wird in der Regel ein bestimmter Dampf mit einer bestimmten Temperatur und einem bestimmten Druck benötigt. Daher ist es vorteilhaft die Stufe auszuwählen, die einen Dampf mit einer geeigneten Temperatur und einem geeigneten Druck zur Verfügung stellt. Es hat sich als vorteilhaft erwiesen, wenn diese Dampfentnahme-Stufe nach oder vor der letzten Stufe angeordnet ist.

An Hand der Beschreibung und der Figuren werden Ausführungsbeispiele der Erfindung beschrieben. Dabei haben mit denselben Bezugszeichen versehene Komponenten die gleiche Funktionsweise.

Es zeigen:
- FIG 1: eine Dampfkraftanlage gemäß dem Stand der Technik
- FIG 2: eine erfindungsgemäße Dampfkraftanlage.

FIG 1 zeigt eine Dampfkraftanlage (1) gemäß dem Stand der Technik. Die Dampfkraftanlage (1) umfasst eine Dampfturbine umfassend eine Hochdruck-Teilturbine (2), eine Mitteldruck-Teilturbine (3) und eine Niederdruck-Teilturbine (4), die über einen gemeinsamen Wellenstrang (5) drehmomentübertragend miteinander verbunden sind. An den Wellenstrang (5) ist ein nicht näher dargestellter Generator angeordnet.

Über eine Frischdampfleitung (6) strömt Frischdampf über eine Ventilanordnung (7) in einen Hochdruckdampfeintritt (8) der Hochdruck-Teilturbine (2). Über nicht näher dargestellte Leit- und Laufschaufeln entspannt sich der Dampf in der Hochdruck-Teilturbine (2), wobei gleichzeitig die Temperatur des Dampfes geringer wird. Die thermische Energie des Dampfes wird hierbei in Rotationsenergie eines nicht näher dargestellten Rotors umgewandelt. An einem Hochdruckdampfaustritt (9) strömt der Dampf aus der Hochdruck-Teilturbine (2) über eine Hochdruck-Drosselklappe (10) zu einem Zwischenüberhitzer (11). Im Zwischenüberhitzer (11) wird der Dampf auf eine höhere Temperatur wieder erhitzt. Anschließend strömt der Dampf über eine zweite Ventilanordnung (12) in einen Mitteldruckdampfeintritt (13) der Mitteldruck-Teilturbine (3).

In der Mitteldruck-Teilturbine (3) entspannt sich der Dampf, wobei wiederum die Temperatur des Dampfes sinkt. Die Mitteldruck-Teilturbine (3) umfasst eine erste Flut (14) und eine zweite Flut (15). Die erste Flut (14) und die zweite Flut (15) umfassen jeweils nicht näher dargestellte Stufen, die durch nicht näher dargestellte Leit- und Laufschaufeln gebildet werden. Der in die Mitteldruck-Teilturbine (3) einströmende Dampf teilt sich in einen ersten Teilstrom und in einen zweiten Teilstrom auf, wobei der erste Teilstrom durch die erste Flut (14) und der zweite Teilstrom in entgegengesetzter Strömungsrichtung in die zweite Flut (15) strömt.

Der Dampf in der ersten Flut (14) strömt über einen ersten Mitteldruckturbinenaustritt (16) in eine erste Turbinenaustrittsleitung (17). Der Dampf in der zweiten Flut (15) strömt über einen zweiten Mitteldruckturbinenaustritt (18) in eine zweite Turbinenaustrittsleitung (19). Sowohl die erste Turbinenaustrittsleitung (17) als auch die zweite Turbinenaustrittsleitung (19) münden in eine, durch einen waagrechten Strich symbolisierte Überströmleitung (20). Die Überströmleitung (20) ist strömungstechnisch mit einem Niederdruckeintritt (21) über eine Niederdruckeinströmleitung (22) verbunden.

In der ersten Flut (14) und in der zweiten Flut (15) ist jeweils nach einer nicht näher dargestellten Dampfentnahme-Stufe eine Dampfentnahme-Leitung (23) angeordnet. Der in die erste Flut (14) und in die zweite Flut (15) strömende Dampf strömt zum einen über die erste (17) und die zweite Turbinenaustrittsleitung (19) zur Niederdruck-Teilturbine (4) und zum anderen über die Dampfentnahme-Leitung (23) zu einem nicht näher dargestellten externen Dampfverbraucher. Der in die Dampfentnahme-Leitung (23) strömende Dampf könnte beispielsweise als Prozessdampf für chemische Prozesse oder als Heizdampf für die Fernwärme verwendet werden. Dieser Dampf muss gewöhnlich bei einem bestimmten Druck zur Verfügung gestellt.

Die Dampfkraftanlage (1) weist ferner eine Drosselklappe (24) in der Überströmleitung (20) auf. Mit dieser Drosselklappe (24) lässt sich der Druck des Dampfes in der Überströmleitung (20) einstellen. Darüber hinaus hängt der Druck des Dampfes in der Dampfentnahme-Leitung (23) von der Einstellung der Drosselklappe (24) ab. Nachteilig ist hierbei, dass bei der Dampfentnahme aus der Dampfentnahme-Leitung (23) der gesamte über die erste Turbinenaustrittsleitung (17) und über die zweite Turbinenaustrittsleitung (19) in die Niederdruck-Teilturbine (4) strömende Dampf gedrosselt wird. Diese hohen Drosselverluste vermindern deutlich die mechanische Leistung.

Die Figur 2 zeigt eine erfindungsgemäße Dampfkraftanlage (1). Der Unterschied zwischen der in Figur 1 und der in Figur 2 dargestellten Dampfkraftanlage (1) liegt im Wesentlichen darin, dass die Drosselklappe (24) in der Überströmleitung (20) entfällt. Des Weiteren besteht ein Unterschied darin, dass in die zweite Turbinenaustrittsleitung (19) eine Entnahme-Drosselklappe (25) angeordnet ist. Die Entnahme-Drosselklappe (25) ist wie die Drosselklappe (24) zum Ändern des Dampfdruckes ausgebildet.

Durch die in der zweiten Turbinenaustrittsleitung (19) angeordnete Drosselklappe (25) wird nunmehr lediglich in der zweiten Turbinenaustrittsleitung (19) gedrosselt und hat somit keinen direkten Einfluss auf die Dampfparameter des aus der ersten Flut (14) in die Niederdruck-Teilturbine (4) einströmenden Dampfes. Der aus der ersten Flut (14) ausströmende Dampf versorgt im Wesentlichen die Niederdruck-Teilturbine (4). Der aus der zweiten Flut (15) ausströmende Dampf steht zur Dampfversorgung des externen Dampfverbrauchers zur Verfügung. Der gewünschte Druck wird über die in der zweiten Turbinenaustrittsleitung (19) angeordneten Drosselklappe (25) eingestellt. Somit verursacht nur dieser über die Drosselklappe (25) gedrosselte Dampf einen thermodynamischen Verlust. Die Schluckfähigkeit der zweiten Flut (15) kann an den externen Dampfverbraucher angepasst werden. Des Weiteren kann eine resultierende Schubkraft durch die Asymmetrie durch geeignete Wellensteigungen kompensiert werden.

Der Leistungsverlust in der ersten Flut (14) ist nunmehr deutlich geringer, da der Dampf in der ersten Flut (14) keiner gewollten Drosselung unterliegt. Ebenso ist es möglich die in der zweiten Turbinenaustrittsleitung (19) angeordnete Drosselklappe (25) kostengünstiger auszubilden. Es ist denkbar diese Drosselklappe (25) kleiner als die Drosselklappe (24) gemäß Figur 1 auszubilden. Dadurch kann die Höhe der Überströmleitung (20)reduziert werden.

## Patentansprüche

1. Dampfkraftanlage (1) umfassend
eine Mitteldruck-Teilturbine (3) mit einer mehrere Stufen umfassenden ersten Flut (14) und eine mehrere Stufen umfassenden zweiten Flut (15) sowie
einer Dampfentnahme-Leitung (23) in der zweiten Flut (15) zum Entnehmen von Dampf für einen externen Dampfverbraucher,
wobei die erste Flut (14) eine erste Turbinenaustrittsleitung (17) und die zweite Flut eine zweite Turbinenaustrittsleitung (19) aufweist,
eine Überströmleitung (20), eine Drosselklappe (25) und eine Niederdruck-Teilturbine (4),
wobei die Überströmleitung (20) strömungstechnisch mit der ersten Turbinenaustrittsleitung (17), mit der zweiten Turbinenaustrittleitung (19) und mit der Niederdruck-Teilturbine (4) verbunden ist,
**dadurch gekennzeichnet, dass** die Drosselklappe (25) in der zweiten Turbinenaustrittsleitung (19) angeordnet ist.

2. Dampfkraftanlage (1) nach Anspruch 1,
wobei die erste Turbinenaustrittsleitung (17) und die zweite Turbinenaustrittsleitung (19) in die Überströmleitung (20) mündet.

3. Dampfkraftanlage (1) nach Anspruch 1 oder 2,
wobei die Dampfentnahme-Leitung (23) nach einer Dampfentnahme-Stufe angeordnet ist.

4. Dampfkraftanlage (1) nach Anspruch 1, 2 oder 3,
wobei die Dampfentnahme-Stufe vor der letzten Stufe angeordnet ist.

5. Dampfkraftanlage (1) nach einem der vorhergehenden Ansprüche,
mit einem Dampfverbraucher, der strömungstechnisch mit der Dampfentnahme-Leitung (23) verbunden ist.

6. Dampfkraftanlage (1) nach einem der vorhergehenden Ansprüche,
wobei die erste Flut (14) der Mitteldruck-Teilturbine (3) zur Versorgung des Dampfverbrauchers und die zweite Flut (15) zur Versorgung der Niederdruck-Teilturbine (4) ausgebildet ist.

7. Dampfkraftanlage (1) nach einem der vorhergehenden Ansprüche,
wobei die Überströmleitung (20) mit einer Niederdruckeinströmleitung (22) der Niederdruck-Teilturbine (4) strömungstechnisch verbunden ist.

8. Verfahren zur Versorgung eines externen Dampfverbrauchers,
wobei eine Mitteldruck-Teilturbine (3) mit einer ersten Flut (14) und einer zweiten Flut (15) vorgesehen ist und der Dampfverbraucher durch die zweite Flut (15) über eine Dampfentnahme-Leitung (23) mit Dampf versorgt wird,
wobei expandierter Dampf aus der ersten Flut (14) über eine erste Turbinenaustrittsleitung (17) und expandierter Dampf aus der zweiten Flut (15) über eine zweite Turbinenaustrittsleitung (19) in eine Überströmleitung (29) in eine Niederdruck-Teilturbine (4) mündet,
**dadurch gekennzeichnet, dass**
in der zweiten Turbinenaustrittsleitung (19) eine Drosselklappe (25) verwendet wird, um den Druck des aus der Dampfentnahme-Leitung (23) strömenden Dampfes einstellen zu können.

## Claims

1. Steam power plant (1), comprising
an intermediate-pressure turbine section (3), with a first flow (14) comprising a plurality of stages, and a second flow (15) comprising a plurality of stages, and also a steam-extraction line (23) in the second flow (15) for extracting steam for an external steam consumer,
wherein the first flow (14) has a first turbine discharge line (17) and the second flow has a second turbine discharge line (19),
a crossover line (20), a throttle valve (25) and a low-pressure turbine section (4),
wherein the crossover line (20) is fluidically connected to the first turbine discharge line (17), to the second turbine discharge line (19), and to the low-pressure turbine section (4),
**characterized in that** the throttle valve (25) is arranged in the second turbine discharge line (19).

2. Steam power plant (1) according to Claim 1,
wherein the first turbine discharge line (17) and the second turbine discharge line (19) lead into the crossover line (20).

3. Steam power plant (1) according to Claim 1 or 2, wherein the steam-extraction line (23) is arranged downstream of a steam-extraction stage.

4. Steam power plant (1) according to Claim 1, 2 or 3, wherein the steam-extraction stage is arranged upstream of the last stage.

5. Steam power plant (1) according to one of the preceding claims,
with a steam consumer, which is fluidically connected to the steam-extraction line (23).

6. Steam power plant (1) according to one of the preceding claims,
wherein the first flow (14) of the intermediate-pressure turbine section (3) is designed for supplying the steam consumer and the second flow (15) is designed for supplying the low-pressure turbine section (4).

7. Steam power plant (1) according to one of the preceding claims,
wherein the crossover line (20) is fluidically connected to a low-pressure inflow line (22) of the low-pressure turbine section (4).

8. Method for supplying an external steam consumer,
wherein an intermediate-pressure turbine section (3) is provided with a first flow (14) and a second flow (15) and the steam consumer is supplied with steam by means of the second flow (15) via a steam-extraction line (23), wherein expanded steam from the first flow (14), via a first turbine discharge line (17), and expanded steam from the second flow (15), via a second turbine discharge line (19), enter a crossover line (20) into a low-pressure turbine section (4),
**characterized in that**
a throttle valve (25) is used in the second turbine discharge line (19) in order to be able to set the pressure of the steam which issues from the steam-extraction line (23).

## Revendications

1. Centrale ( 1 ) électrique à vapeur comprenant une sous-turbine ( 3 ) moyenne pression ayant un premier flux ( 14 ) comprenant plusieurs étages et un deuxième flux ( 15 ) comprenant plusieurs étages, ainsi que
un conduit ( 23 ) de prélèvement de vapeur dans le deuxième flux ( 15 ) pour prélever de la vapeur pour un utilisateur extérieur de vapeur,
dans laquelle le premier flux ( 14 ) a un premier conduit ( 17 ) de sortie de la turbine et le deuxième flux a un deuxième conduit ( 19 ) de sortie de la turbine,
un conduit ( 20 ) de dérivation, un papillon ( 25 ) d'étranglement et une sous-turbine ( 4 ) basse pression,
dans laquelle le conduit ( 20 ) de dérivation communique fluidiquement avec le premier conduit ( 17 ) de sortie de la turbine, avec le deuxième conduit ( 19 ) de sortie de la turbine et avec la sous-turbine ( 4 ) basse pression, **caractérisée en ce que** le papillon ( 25 ) d'étranglement est monté dans le deuxième conduit ( 19 ) de sortie de la turbine.

2. Centrale ( 1 ) électrique à vapeur suivant la revendication 1,
dans laquelle le premier conduit ( 17 ) de sortie de la turbine et le deuxième conduit ( 19 ) de sortie de la turbine débouchent dans le conduit ( 20 ) de dérivation.

3. Centrale ( 1 ) électrique à vapeur suivant la revendication 1 ou 2,
dans laquelle le conduit ( 23 ) de prélèvement de vapeur est monté après un étage de prélèvement de vapeur.

4. Centrale ( 1 ) électrique à vapeur suivant la revendication 1, 2 ou 3,
dans laquelle l'étage de prélèvement de vapeur est monté avant le dernier étage.

5. Centrale ( 1 ) électrique à vapeur suivant l'une des revendications précédentes,
comprenant un utilisateur de vapeur, qui communique fluidiquement avec le conduit ( 23 ) de prélèvement de vapeur.

6. Centrale ( 1 ) électrique à vapeur suivant l'une des revendications précédentes,
dans laquelle le premier flux ( 14 ) de la sous-turbine ( 3 ) moyenne pression est constitué pour alimenter l'utilisateur de vapeur et le deuxième flux ( 15 ) pour alimenter la sous-turbine ( 4 ) basse pression.

7. Centrale ( 1 ) électrique à vapeur suivant l'une des revendications précédentes,
dans laquelle le conduit ( 20 ) de dérivation communique fluidiquement avec un conduit ( 22 ) d'entrée de basse pression de la sous-turbine ( 4 ) basse pression.

8. Procédé d'alimentation d'un utilisateur extérieur de vapeur,
dans lequel on prévoit une sous-turbine ( 3 ) moyenne pression ayant un premier flux ( 14 ) et un deuxième flux ( 15 ) et on alimente en vapeur l'utilisateur de vapeur par le deuxième flux ( 15 ) par l'intermédiaire d'un conduit ( 23 ) de prélèvement de vapeur,
dans lequel de la vapeur détendue provenant du premier flux ( 14 ) arrive par un premier conduit ( 17 ) de sortie de la turbine et de la vapeur détendue provenant du deuxième flux ( 15 ) par un deuxième conduit ( 19 ) de sortie de la turbine dans un conduit ( 29 ) de dérivation dans une sous-turbine ( 4 ) basse pression,
**caractérisé en ce que**
on utilise, dans le deuxième conduit ( 19 ) de sortie de la turbine, un papillon ( 25 ) d'étranglement, afin de pouvoir régler la pression de la vapeur passant dans le conduit ( 23 ) de prélèvement de vapeur.
